# NEW EUROPEAN PATENT SPECIFICATION

(11) **EP 0 694 244 B2**
(45) Date of publication and mention of the opposition decision: **30.08.2000**
(45) Mention of the grant of the patent: 06.11.1996
(21) Application number: 95904521.2
(22) Date of filing: 21.12.1994
(51) Int. Cl.: H04N 7/00

(54) **INTERACTIVE TELEVISION SYSTEM**
INTERAKTIVES VIDEOSYSTEM
SYSTEME VIDEO INTERACTIF

(30) Priority: 06.05.1994 IT MI094874
(43) Date of publication of application: 31.01.1996
(73) Proprietor: ITALTEL SOCIETA ITALIANA TELECOMUNICAZIONI s.p.a., 20149 Milano (IT)
(72) Inventor: COLOMBO, Valeriano, I-20030 Baruccana Di Seveso (MI) (IT); BERTOLINI, Angelo, I-20010 Cornaredo (MI) (IT); MARTINI, Stefano, I-24100 Mozzo (BG) (IT); PEZZOTTA, Augusto, I-24060 Gorlago (BG) (IT); ALLONI, Riccardo, I-20124 Milano (IT)
(74) Representative: Schütz, Peter, Dipl.-Ing.
(86) International application number: EP9404268
(87) International publication number: WO9531068

(56) References cited:
- EP-A- 0 309 355
- EP-A- 0 390 041
- EP-A- 0 535 572
- WO-A-92/14332
- WO-A-92/15175
- WO-A-93/07713
- WO-A-94/13102
- DE-A- 3 139 343
- FR-A- 2 626 731
- US-A- 4 630 108
- US-A- 5 119 188
- US-A- 5 138 649
- IEEE TRANSACTIONS ON CONSUMER ELECTRONICS, vol. CE-37, no. 2, May 1991, pages 108-115; S.J. WINICK:" The RF Medium in the Home - The Move to Spread Spectrum"
- ELEKTRONIK, 1992, NO. 3, PAGES 58-65; B. REDER "Abschied vom Kabel?"
- W. KAISER, "Interaktive Breitbandkommunikation", TELECOMMUNICATIONS MÜNCHENER KREIS, vol. 8, 1982, Springer-Verlag, pages 118-127
- F. FELLBAUM et al., "Elektronische Textkommunikation, VDE-VERLAG, 1983, pages 200-205

## Description

### Field of the invention

The present invention relates to an interactive television system enabling the private user to participate actively in television programmes such as quiz, commercials, opinion polls, sport events, telemarketing, etc.

In particular the present invention is directed to a system adapted for use with existing broadcast communication systems for allowing participants to interact with the system in order, by way of example only, to shop, enter into games, engage in educational presentation and other events where information is provided and the participant or viewer can make an appropriate response thereto.

### Background art

WO-A-9310605 discloses an interactive television system including an insertion system for inserting in a preferred embodiment coded interactive information in the Vertical Blanking Interval (VBI) of a standard television system. The signal is received and decoded by a decoded system which includes a set-top decoder which sends an infrared signal to an handheld device. The viewer using the handheld device can interact with a game. sports, educational or other presentation on television.

US-A-4.807.031 discloses a method and apparatus for producing a composite video signal containing regular video program material and auxiliary control data by modulating at least one video region within the viewer area of the television in such manner that the modulation is substantially invisible to the television viewer, displaying signal on a television and decoding such control data for ancillary use, characterized by modulating the horizontal line luminance and/or chrominance in a manner that the auxiliary control data superimpose on the regular video program material. Such system obliges the subscriber to use an optical sensor near of the TV-set with the consequent positioning difficulty.

Both known solutions are limited to interactivity data transmission systems from the TV broadcasting station to the end user and the manipulation of said data for the participation of the subscriber in interactive programmes.

Moreover an interactive satellite television system where for each user a radio transmitter is provided, which is equipped with its own antenna to serve the TV decoder. The covered area is divided in cells, and each one is provided with a local receiver receiving the communications of the subscribers belonging to the cell and transmitting them to the satellite.

Moreover the known systems provide for a television decoder equipped with a display on which the pictures are reproduced, which are required for the interaction with the video event, and therefore it represents a considerable constraint of the interactive functions.

WO-A-9413102 discloses a distributed database system which provides using a modified handset of a cordless telephone assembly with this latter being connected in a conventional manner to the user's telephone line. This document is a prior art document according to Art. 54(3) EPC in combination with Art. 56 EPC.

EP-A-0 535 572 upon which the preamble of the main claim is based, provides for a complete interactive terminal unit or CIT unit incorporating a modem and connected via a cable to the user's telephone line.

WO-A-9214332 discloses an emergency call unit connected to a telephone line of a public switched telephone network for reaching either a control centre or a limited numbers of predetermined users. Associated with the call unit is a portable unit or pendant having a keyboard identical with that of the call unit. whereby the user is capable of sending emergency or alarm calls

### Objects of the invention

It is the object of the present invention to realize an interactive television system overcoming the above-mentioned drawbacks and limitations of the known methods and in particular one which offers in addition to the above-mentioned functions also the possibility to close the information flow from the subscriber towards the TV broadcasting station in an exhaustive way and at the same time extremely simple for the subscriber.

### Summary of the invention

The invention achieves these objects through an interactive television system as defined in claim 1.

The proposed solution is a global one with the possibility of an informative flow from the subscriber to the TV carrier on a widespread and everywhere available support (the telephone copper); such flow is distinct from the inverted flow, from the TV carrier to the subscriber. This flow is of the broadcast or irradiated type (via terrestrial ether, satellite or cable).

The system according to the invention provides for the connection of the subscriber's decoder (or set top box) to the telephone line through a radio frequency link (similar to that one of the "cordless"), and therefore without forcing the subscriber to install a specific telephone cable as requested by other known solutions.

For what concerns data transmission from the TV station to the subscriber the invention uses in an advantageous way the data codification system on the VBI according to the European standard Teletext, which guarantees security and protection in addition to the possibility for the TV transmitters to use devices they already have.

Moreover a "navigation" system through 4 directional keys makes it possible to provide the subscriber with a very simplified remote control, as for example the universal one, completed by 4 keys for the "navigation" on the screen, one confirmation key and possibly others such as: an ON/OFF button and a MENU activation key.

### Brief description of the drawings

The features of the present invention which are believed to be novel are also set forth with particularity in the appended claims.
The invention, together with further objects and advantages thereof, may best be understood by making reference to the following description taken together with the accompanying drawings, in which reference numerals identify the elements, and wherein:
Fig. 1 shows schematically the general architecture of the system according to the invention;
Fig. 2 shows in a more detailed way the structure and the information flow of the system according to the invention;
Fig. 3 shows a diagram of a subscriber station indicated by 3 in Fig 1;
Fig. 4 shows in a more detailed way the structure of the producer 60; and
Fig. 5 shows in a more detailed way the structure of the PCE; and
Fig. 6 shows schematically the structure of a remote control according to the invention.

### Description of the preferred embodiment of the invention

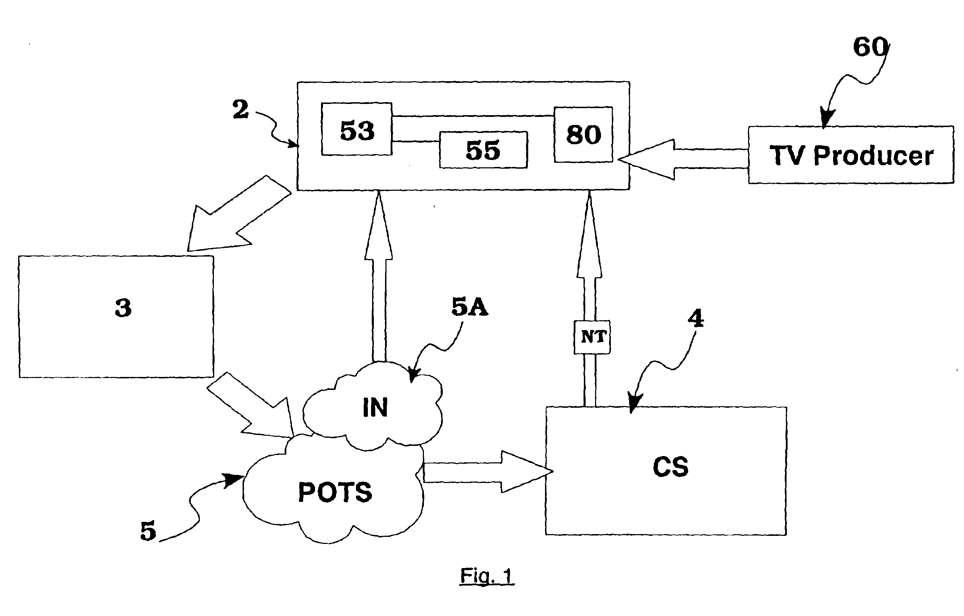

With reference to figure 1 the system according to the invention includes for a TV programme distributor or Producer 60 connected to a TV station or better to a TV server 2 provided with the Teletext system (TTX) broadcasting (via ether or cable) TV video signals and TTX messages. A general subscriber 3 of the system is equipped with a user device suitable to capture and read TTX messages and to make windows appear in impression on the TV screen, which will guide him for the participation in the interactive TV event.

The subscriber stations strewn over the territory are linked to a services reference centre 4 CS through the public switching telephone network (POTS) 5, eventually by means of the so-called intelligent network IN 5A, in the case it would be necessary to use services associated to "Green Numbers", Mass Calling, Televoting and Audiotex.

Finally from the services reference centre 4 the collected data passes over to a interactive television event coordination station 80 (PCE) located preferably close to the TV producer using specific and/or public data networks. From the coordination station it is possible to transmit again data towards the subscriber equipment to communicate the results of the participation in the interactive event.

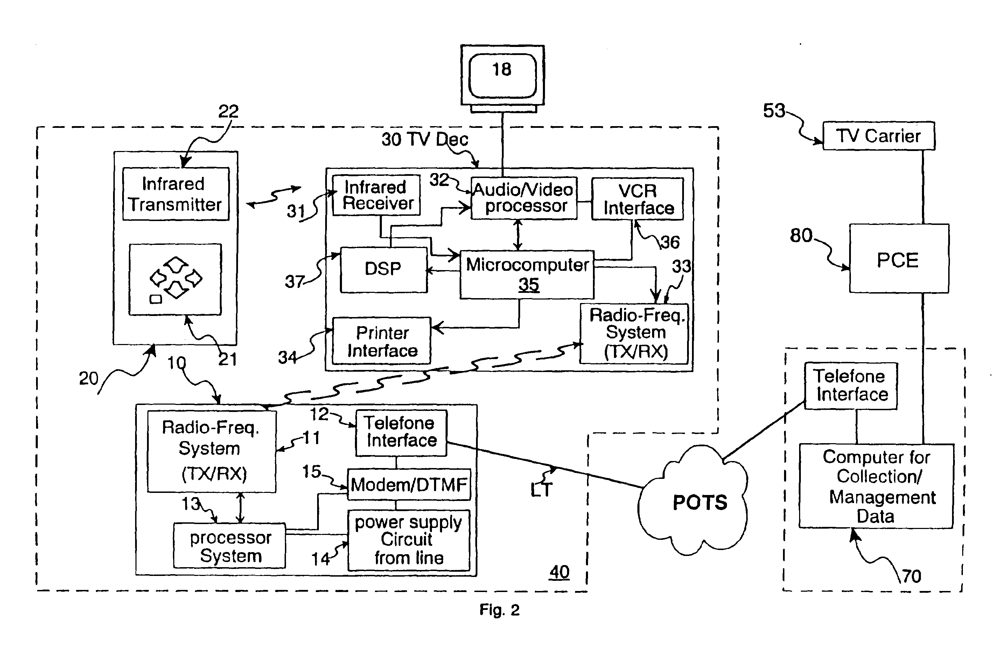

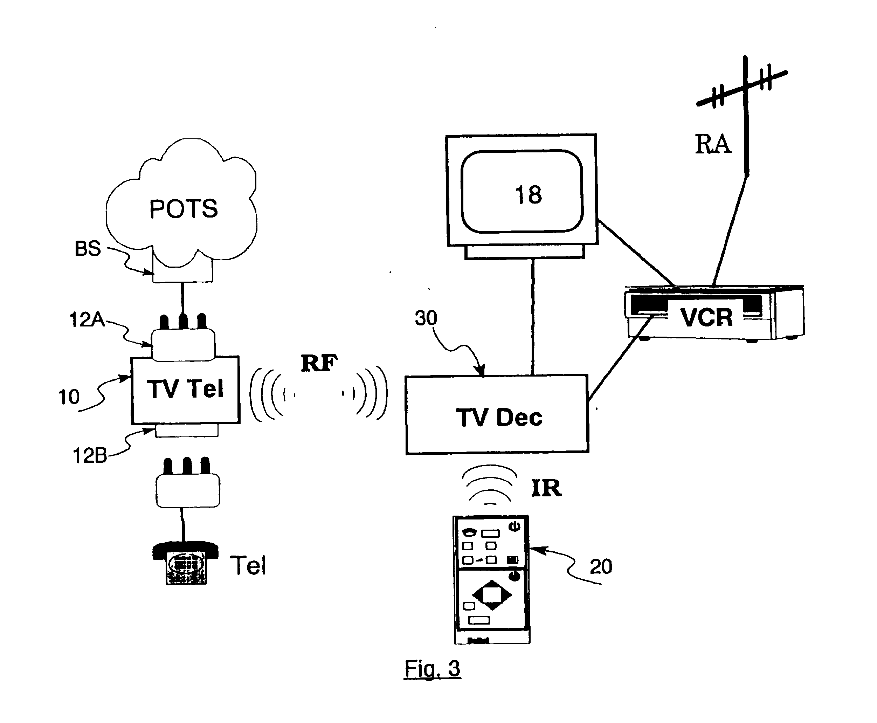

Now with reference to figures 2 and 3 a generic TV station 53 transmits to the subscriber through the Teletext system the series of data necessary for the activation of the interactive TV event. Normally such data is included in one or more Teletext pages and transmitted through the PCE work station 80.

The subscriber station 3, originally already provided with a television set 18 including a receiver antenna RA is completed by a unit 40 called TV Kit, which includes a television decoder 30, a device 10 (TV Tel) for the access to the telephone line and a remote control 20. As will be illustrated in detail hereafter the different elements of the device 40 have been designed and implemented in a way that they are self-installing and self-shaping and therefore it is possible to connect them in the domestic environment without the assistance of external specialized staff.

The television decoder 30, also labelled set-top box, is suitable to capture Teletext data through an input/ output audio/video signal processor 32, to read them by means of a microcomputer 35, and to make appear on the TV screen of the receiver 18 windows in impression which will guide the subscriber for the participation to the interactive event transmitting them to the subscribers television set through said audio/video signal processor 32 The decoder 30 includes moreover an interface 34 for a standard type printer, and it is therefore possible to connect here, as an alternative to an integrated but not shown miniprinter, an external traditional printer. Moreover a voice device 37 is provided which is for example realized by a microprocessor and an appropriate DSP for the transmission of sound messages to be received by the subscriber.

The remote control 20 makes an "interactive" use of domestic television possible and consists substantially of an infrared transmitter 22 and keyboard 21 enabling the subscriber to move inside interactivity windows by means of four directional push-buttons or pointers provided for on the key board, in order to make the proper choices/answers transmitting them by means of the infrared transmitter 22 to the set-top box 30. These choice/answer messages are received by the infrared receiver 31 of the decoder 30 and transmitted to the microcomputer 35, which will consequently read them and transmit them by means of the audio/video signal processor to the TV set 18.

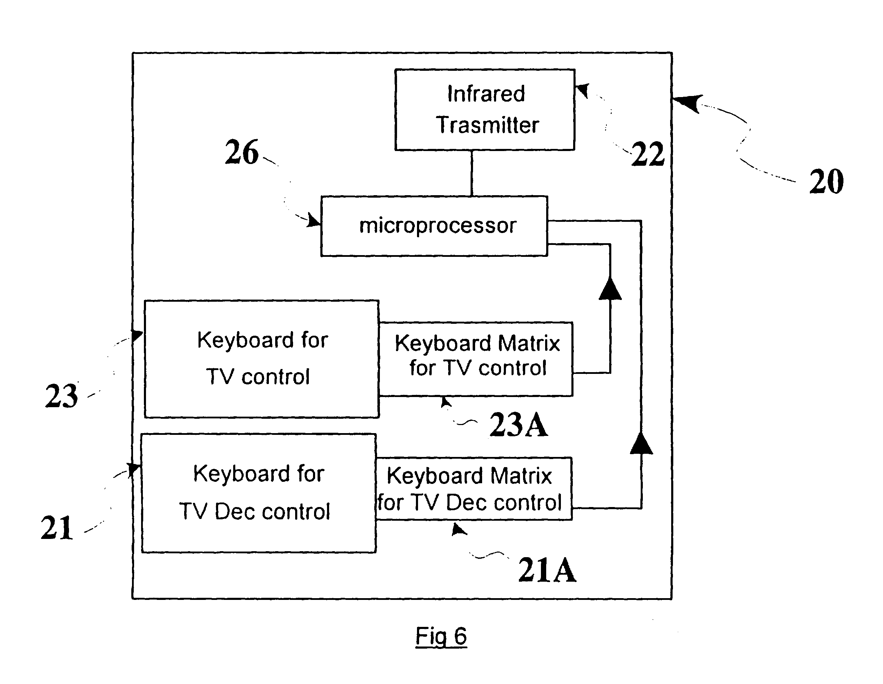

Fig. 6 shows a block diagram of a preferred embodiment of remote control according to the invention including the already mentioned infrared transmitter 22, a portion of a universal remote control with a keyboard 23 linked to a matrix 23A for the control of the TV set and a portion with a keyboard 21 linked to the matrix 21 A for the control of the decoder 30 which makes the interactivity functions possible.

The remote control according to the invention makes it possible to control the decoder 30 through a simplified keyboard comprising 4 push-buttons for the "navigation" inside the interactivity windows superimposed to the screen of the television set 18. The orders given on the keyboard 21 for the control of the decoder are transmitted by the matrix 21 A to the microprocessor 26 which identifies the signal and transmits it to the decoder 30 through the transmitter 22.

The remote control makes it further possible to control the TV set 18 (of whatever brand and model) through a simplified keyboard 23 provided with keys for the regulation of the volume and zapping. The recognition of the type of TV set by the remote control is performed by the known and automatic way like that for the commercialized universal remote controls.

The microprocessor 26 is able to recognize automatically if the control signal arrives from the matrix 21 A of the keyboard 21 for the control of the decoder 30, or from the matrix 23A of the TV set control keyboard 23, and therefore to converse alternatively with the infrared receiver of the decoder 30 or with that one of the TV set 18.

According to the data received from the transmitter 53 and to the responses received from the subscriber 3, the microcomputer 35 is able to generate a data stream which is automatically transmitted to a data collecting and managing processor 70, as will be described in detail hereafter The microcomputer 35 transfers the data stream to the transmitter of the radio-frequency system 33 which will transmit it in radio-frequency to the receiver of a radio-frequency system 11 of the device 10 (TV Tel) for the access to the telephone line LT The processor system 13 of the device 10 reads the messages received from the decoder 30 and, with the aid of the modem/DTMF 15 forwards the message on a telephone line LT. The telephone number to be called each time by the telephone interface 12 is transmitted by radiolink or cable together with the interactivity data and may be whatever type of phone number (Green Number. Audiotex, "Mass Calling" or "Televoting" number etc.). The device 10 is remote supplied by the LT line thanks to a power supply circuit 14.

As indicated, the connection between the TV-Kit 40, wherever installed on the territory, and the reference data collecting/managing processor 70 is realized through the telephone line LT and the public switching telephone network (POTS), possibly with the help of the intelligent network (IN), in case it is necessary to use the linked services of Green Number, Mass Calling, Televoting and Audiotex.

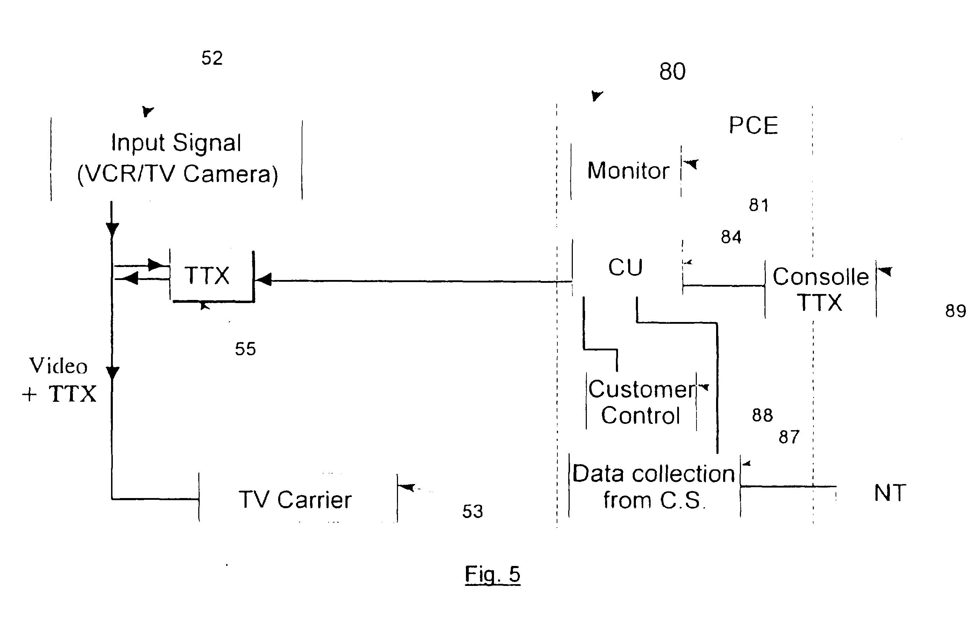

From the reference data collecting/managing processor 70 of the single TV event, the collected data goes over to the interactive television event coordination station (PCE) 80, which structure will be illustrated in detail with reference to Fig. 5.

The PCE 80 is located next to the TV carrier and receives the data transmitted by the subscriber by means of specific and/or public NT data systems (closing in this way the informative circle transmitter-subscriber-transmitter), and forwards the data considered to be essential for the good issue of the television event to the TV carrier 53 broadcasting the specific programme.

The cost for the calls (which may be charged to the calling subscriber, the services reference centre C.S. or shared between both of them) may be defined for each single event by the TV station (through the PCE 80) by activating the "Customer Control" function 88 (see Fig. 5) with respect to the IN.

With particular reference now to Fig 3, the structure of the subscriber equipment will be described in detail This one includes the decoder 30 which might be connected through an Euro Scart plug to the television set 18 and to the video recorder VCR (if available), to the remote control 20, and to the device 10 for the access to the telephone line. The device 10 is self-fitting to be installed on the telephone jack (for example a tripolar one) like a normal telephone set without the need of an external power supply.

The device 10 is preferably provided with a tripolar male plug 12A on one side and a female one on the other, so that in order to connect the device operationally with the already existing telephone jack the subscriber has just to disconnect the plug of the telephone set, to insert the device on the tripolar jack BS and to connect again the plug of the telephone with the device 10.

If the user is equipped only with the TV set 18, the device 30 is connected to the TV set 18 through a Scart plug, and this one maintains the connection with the plug of the receiver antenna RA.

If the user is equipped with a television set 18 and with a video recorder as shown in Fig. 3 both Scart plugs are used connecting by the first one the decoder to the TV set and by the second one the device 10 to the video recorder VR; the connection in series between receiver antenna plug RA, the television set 18 and the video recorder VR, remain unchanged.

The decoder 30 connected through the Scart plug to the TV set receives a low frequency video signal and it is suitable to identify the data signal transmitted by the frame return by the same technique used for Teletext. The principal functions of the decoder 30 carried out by the microcomputer 35 are the following:
1. to display in impression the menu management of the available services and the subscriber's operations directly on the TV screen by means of the audio/video signal processor 32;
2. to print the messages for the subscriber through the printing interface 34;
3. to transmit voice messages for the subscriber forwarded by the voice device 37 to the television set through the audio/video signal processor 32;
4 to manage the relation between the watched "Channel/Programme" and the required "Service";
5. to perform an automatic transmission of the call to the data collecting/managing processor 70 with the modalities each time provided for by the type of service required through the radio-frequency unit 33, which transmits the message to the device 10;
6. to store the subscriber's personal data so that it can be identified by the Service reference Centre at the moment of the call;
7. to display the replies the Service reference Centre transmits to the subscriber through the radio-frequency unit 33 which operates in this case as receiver of the TV Tel 10;
8. to store data in case the system is busy at the moment of the call.

The communication device 10 or TV-Tel has the function to enable the communication between subscriber and Service reference Centre, and it is connected on one side to the telephone line LT through a telephone interface 12 (minisupport to be included directly in the telephone jack), and on the other side to the decoder 30 in radio-frequency through the radio-frequency system 11. This one is moreover provided with a bivalent data generator 15 suitable to transmit data as well as voice (for example a Modem/DTMF), and it is remote power supplied by the telephone line LT through a power supply circuit 14.

This device makes it possible to:
- establish a connection with the decoder 30 in radio-frequency with for security reasons codified "cordless" functionality through the radio-frequency unit 11;
- remote control the decoder 30 up to a distance of 15m;
- maintain the installed telephone system (phone answering machine, "cordless" etc.),
- select the phone number whenever required either with the traditional modality or with multifrequency according to the characterization of the subscriber,
- converse on the public switching telephone network through the system modem/DTMF 15 with DTMF modality (multifrequency) for the services associated to the Intelligent Network (Televoting, Mass Calling, Audiotex, etc.) or with data half-duplex modality at a speed of 1.200 bit/s with the Service Centres.
- manage contemporaneously a plurality of decoders 30 managing also the conflicts deriving from contemporary access requests.

As already mentioned before, the decoder 30 may also be connected to the video recorder VCR through the second Scart plug for the services associated to the vision of interactive video cassettes in a room (for example video catalogues, training courses, reception of info-Broad specifications etc.), and the microcomputer 35 of the decoder 30 is suitable to recognize automatically if the signal arrives from the receiver antenna or from the video recorder and to operate accordingly.

The producer 60 is the system put before the generation and insertion of the interactive functionality inside the single television event and works in two modalities. In the first case the system allows to insert the interactive data related to the provided "story board" directly on a pre-stored tape, thus obtaining an "interactive video tape" which will then be broadcast by the TV station.

In the other case the system enables to design previously the series of interactive data related to the event ("story board") and to store them on suitable files; these files are then transferred to the TV station which will broadcast them together with the video signal.

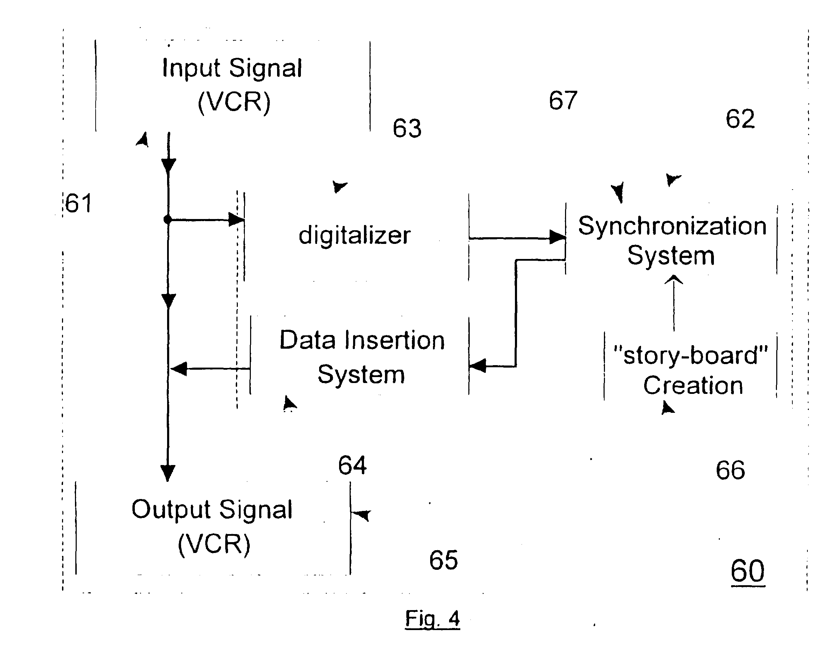

The two working modalities of producer 60 are illustrated in details in Fig. 4.

In the case of interactive video tape the system makes it possible to design the interactivity "story board" provided for by means of the suitable software 66. The synchronization system 67 receives from the digitalizer 63 the time code signal associated with the film and eventually with the frame too and it synchronizes the time code with the interactive data from the system 66. The synchronization system 67 send everything to the data insertion system 64 that enables to insert the data and the time code in the video signal to send all to the output signal (VCR) 65 obtaining in this way an "interactive video cassette" 65 which will then be broadcast by the TV station through the appropriate devices.

If the data are stored on files, the "storyboard" creation 66 enables to construct the "story board" of the event as in the previous case which yet will be stored in suitable files which at their turn will be transferred to the Teletext data base of the TV station 55. During the transmission, through the PCE 80, such data are automatically transmitted from the data base to the live picture under the control of a "time code" as well as "hooked" at the suitable moment by the operator

It must be noticed that the "interactive video tape" 65 produced with stored modality turns out anyhow to be readable by whatever home video recorder, and it is therefore possible to produce them in large quantities and to distribute them directly to the subscriber (see the case of video catalogues, home training courses, etc ).

Already today the majority of national/local TV carriers own TTX Teletext systems as part of their own broadcast signal transmission equipment, and which are suitable - through a TTX console - to insert the data on VBI In this case the system PCE 80 must be integrated in the TTX system of the TV station Vice versa in the case in which the TV station is not equipped with the TTX system, this function is managed by means of the PCE 80 that can carry out the TTX console function, too.

The PCE 80 makes it possible to transmit to the subscriber the data necessary for the interactivity by synchronizing it with the pictures. In the first case the input for the transmitter is the "interactive video cassette" 65 previously produced by the producer; while in the second case the input arrives directly from the data base of the Teletext system 55 where the files to be transmitted together with the pictures reside.

With reference to Fig. 5 is now described in detail the PCE system operating according to the following modalities.

The "interactive data" prepacked by the producer 60 (and produced in a form which is compatible with the standard of the TTX systems) are directed to the TV carrier 53 which will then have to broadcast them with different modalities depending on the fact that the input is an interactive video tape or a file. In the first case the "interactive video tape" 65 produced before has to be put into the input video recorder that the transmission station is able to broadcast.

In the second case the "interactive data" (already included in the data base of the Teletext system 55) has to be correlated with the signal of the event (which arrive from the input TV signal 52) through the PCE system 80 making it possible to follow the TV event (pictures) and to correlate the "story board" of the interactive data (pre-stored on DB) to the evolution of the TV event itself choosing every time the available alternatives, to confirm the made choices/associations to the Teletext system 55 so that this one carries out the "insertion" which is necessary for the broadcasting. A central unit CU 84 coordinates the different functions.

In the case of "repeated interactivity", there is obviously the possibility that the subscriber's remote equipments 40 interact not only one time but several times during the same TV event requiring as a consequence the active supervision by the PCE 80 (coordination station for TV events). The PCE 80 is located in the control cubicle and turns out to be the supervision "articulation" of the different elements involved This has the task:
- to collect by means of the unit labelled 87 the data arriving from the active C S. on the event interested and displaying this data in a separate window on the monitor 81;
- to propose itself compared with the IN as customer control station 88 able to modify the services of the Network according to the event in terms of tariffs and call filter;
- to reproduce on the monitor of the event operator the informations necessary for the event in progress;
- to design/manage informations to make appear on the mega screen of the recording hall of the event;
- to interact with monitor/keyboard of the conductor (alternative actions, requests, etc.);
- to carry out, as already mentioned, also the functions of the TTX console, that is to enable the TTX system for the "insertion" operations which are necessary for the broadcasting.

The data collection/management processor 70 may be a specific one for the single TV event or a general purpose one that means that it can manage different types of interactive TV services.

In any case these processors are suitable to receive the various calls from the subscriber's TV kit 40 and to store the data in order to process them then, and transmit them to the TV station (or to the PCE station 87) which will use them for the realization of the following phases of the interactive TV event; in particular they are elaborated ad hoc for the reception and management of big telephone traffic volumes (with the aid of the Intelligent Network functions).

Finally a particular version of the processor (called MIC: Main Interactive Centre) is suitable to receive from the TV Kit 40 all data concerning the systematic collection of the tracings (generated by the same TV Kit) for statistics and the received data processing purposes, and to generate and manage the complete subscriber data base for the available types of services, etc.

The system according to the invention offers numerous advantages among them first of all the possibility to get access to the telephone line without "getting up" from the armchair, without being obliged to install cables in the home and this independently from the use of a conventional line or a multifrequency line.

Moreover it is suitable to use a standard protocol (Teletext) for the encoding/decoding of data; and the transmission of the interactive messages with a high security protocol which assures a correct and widespread reception on the whole territory.

The use of interactive windows in impression on the TV picture with high graphic capacity (icons, colours, gradations, etc.) and the user friendly subscriber interface with a remote control including seven keys, choices on the TV screen through icons and possible transmission of short vocal sentences ("you win", etc ).

The system according to the invention does not present interferences due to the passage of the signal from the antenna to the interior of intermediate equipment put in series between the plug of the antenna and the TV set (as it happens for example for video recorders or the Tele+ decoder) as the decoder collects the signal from the TV set through a Scart. Moreover the possibility to use interactive video cassettes remains unchanged, a fact that widens the range of interactive TV services to be offered.

Besides that an access key to the use of the telephone line is provided to enable the subscriber to protect himself from improper use of the TV kit by non authorized people (minors etc.).

One of this modification is e.g. to incorporate in the decoder 30 the keyboard allocated in the remote control and in this case the keys are directly activated on the decoder 30 and not on the remote control 20.

A further modification is to connect the decoder 30 to the device 10 for direct and automatic access to the telephone line by means of infrared rays.

An additional modification is to incorporate in the television receiver 18 the decoder 30 and to radiofrequency - or by means of infrared rays - connect this device to the device 10 for the direct and automatic access to the telephone line LT.

## Claims

1. An interactive television system including at least a TV station (2) for broadcasting video signals and associated coded data (TTX), and a plurality of subscriber stations (3), each one provided with:
- a television receiver (18);
- a decoder (30) connected to said television receiver (18) and capable of capturing said coded data (TTX) and displaying them on the screen of said television receiver (18);
- a control device (20) including a keyboard (21) for sending control signals from the user to said decoder (30);
- connecting means between the decoder (30) and the TV broadcast station, said connecting means being linked to the TV broadcast station through a telephone network for transmitting to said station messages from the users, associated with information contained in said coded data (TTX);
**characterized in that**
- said connecting means includes a self-fitting device (10) for the direct and automatic mechanical access to said telephone line (LT) by being configured to have a male plug (12A) provided on one side thereof to be plugged into the jack (BS) of the telephone system like the plug of a normal telephone set and by having and on its other side a female plug (12B) for connection with the plug of the telephone set,
- and said device (10) being connected to said decoder (30) by means of a wireless radio-frequency ink.

2. A system according to claim 1, characterized by the fact that said subscriber stations are connected to a services reference centre (4) through the public switching telephone network (5), and that said services reference centre (4) transmits collected data to a coordination station (80) for interactive television events (PCE), and by the fact that the coordination station (80) (PCE) transmits again data to the subscriber station in standby, according to the data transmitted by the subscriber.

3. A system according to claim 1 or 2, characterized by the fact that said decoder (30) comprises:
- an input/output audio/video signal processor (32) controlled by a microcomputer (35);
- an infrared receiver (31) connected to said microcomputer (35) suitable to receive signals arriving from said keyboard (20);
- a radio frequency system (33) able to send radio frequency signals to said device (10) for direct access to the telephone line (LT).

4. A system according to claim 3, characterized by the fact that said decoder (30) is suitable to display windows on the TV set (18) which are an impression on the pictures of the received programme.

5. A system according to claim 3 or 4, characterized by the fact that said decoder (30) comprises moreover an interface (34) for a printer and a voice device (37) for the transmission of voice messages directed to the subscriber.

6. A system according to claim 5, characterized by the fact that said television decoder (30) includes moreover a VCR interface (36).

7. A system according to the previous claims, characterized by the fact that said remote control (20) includes an infrared transmitter (22) and a keyboard (21) provided with four directional keys and one confirmation key.

8. A system according to the previous claims, characterized by the fact that said remote control (20) comprises an infrared transmitter (22), a first portion of a universal remote control with a keyboard (23) associated to a matrix (23A) for the control of the television set (18) and a second portion with keyboard (21) associated to a matrix (21 A) for the control of the decoder (30) and a microprocessor (26) suitable to recognize automatically if the control signal are outputted from the matrix (21A) of the control keyboard (21) of the decoder (30) or from the matrix (23A) of the control keyboard (23) of the television set.

9. A system according to claim 7, characterized by the fact that said keyboard comprises moreover an On/ Off button and a key for the activation of the menu.

10. A system according to the previous claims, characterized by the fact that said device (10) for direct and automatic access to the telephone line comprises:
- a radio-frequency receiver device (11) which receives radiofrequency signals outputted from said radio-frequency system (33);
- a processor system (13) which reads the messages received from one or more decoders (30), and which manages the conflicts deriving from different contemporaneous access requests;
- a modem/DTMF (15) connected to said processor system (13);
- a telephone interface (12) put in between said modem/DTMF (15) and the telephone line (LT).

11. A system according to claim 10, characterized by the fact that said radio-frequency receiver (11) inside the device (10) for automatic access (33) in the TV decoder (30) are composed by radio-frequency transceivers.

12. A system according to claim 7, characterized by the fact that said device (10) for direct and automatic access to the telephone line includes moreover a power supply circuit (14) which supplies power to said device through said telephone line.

13. A system according to the previous claims, characterized by the fact that said television decoder (30) and said automatic access device (10) are self-installing and self-shaping, and they do not require the intervention of external specialized staff for their application.

14. A system according to the previous claims, characterized by the fact that said device (10) is connected to the tripolar jack (BS) of the telephone system like a normal telephone set, and it is provided with a tripolar male plug (12A) on one side and a female one (12B) on the other side.

15. A system according to the previous claims, characterized in that said keyboard (20) is incorporated in the decoder (30).

16. A system according to claims 1 to 14, characterized in that said keyboard (20) is incorporated in a remote control able to send control signal to said decoder (30).

17. A system according to claim 1, characterized in that said device (10) for the direct and automatic access to the telephone line (LT) is connected to said decoder by means of infrared rays.

18. A system according to claim 1, characterized in that to said TV carrier (53) a TV producer (60) is associated, including:
- a "story board" creation system (66) able to generate the data to be associated to video signals;
- a digitalizer (63) able to convert in digital form the video signals;
- a synchronization system (67), able to receive from said digitalizer (63) the time code signal associated with the film and eventually with the frame and to synchronize the time code with interactive data outputted from said story board creation system (66);
- a data insertion system (64) able to insert the data and the time code in the video signal;
- an output system (65) able to receive the signals outputted from said data insertion system (64).

19. A system according to claim 2, characterized in that said coordination station (80) for the interactive television events (PCE) includes:
- a control unit (84);
- a console TTX (89) connected to said control unit (84);
- a monitor (81);
- a custom control unit (88) able to modify the services of the network according to the event in terms of tariffs and all filter;
- a data collection system (87) from said services reference centre (4) connected to said control unit (84).

20. A system according to claims 1 and 19, characterized in that said coordination station (80) is connected to said TV carrier (53) by means of a teletext system (55).

21. A system according to the previous claims, characterized in that said decoder (30) is incorporated in the television receiver (18) and is radio frequency connected to said device (10) for the direct and automatic access to the telephone line (LT).

## Patentansprüche

1. Interaktives Fernsehsystem, das mindestens eine Fernsehstation (2) für die Ausstrahlung von Videosignalen und zugehörigen kodierten Daten (TTX) und eine Vielzahl von Teilnehmerstationen (3) einschließt, die jeweils ausgestattet sind mit:
- einem Fernsehempfänger(18);
- einem Dekodierer (30), der mit dem genannten Fernsehgerät (18) verbunden und geeignet ist, die genannten kodierten Daten (TTX) zu erfassen und sie auf dem Bildschirm des Fernsehempfängers (18) darzustellen;
- einem Steuergerät (20) mit einer Tastatur (21) zur Sendung von Steuersignalen von dem Benutzer zu dem genannten Dekodierer (30);
- einer Verbindungseinrichtung zwischen dem Dekodierer (30) und dem Fernsehsender, wobei die Verbindungseinrichtung mit dem Fernsehsender durch ein Telefonnetz verbunden ist zur Übertragung von Mitteilungen der Teilnehmer in Verbindung mit in den genannten kodierten Daten (TTX) enthaltenen Informationen zu dem genannten Sender;
**dadurch gekennzeichnet,**
- dass die Verbindungseinrichtung eine von sich aus passende Vorrichtung (10) für den direkten und automatischen mechanischen Anschluss an die Telefonleitung (LT) enthält, die dazu auf ihrer einen Seite mit einem Stecker (12A) ausgebildet ist, der wie der Stecker eines normalen Fernsprechgerätes in die Steckdose (BS) des Fernsprechsystems einsteckbar ist , und auf ihrer anderen Seite eine Steckbuchse (12B) zur Verbindung mit dem Stecker des Fernsprechgerätes hat,
- und dass diese Vorrichtung (10) mit dem Dekodierer (30) über eine drahtlose Funkfrequenzverbindung verbunden ist.

2. System nach Anspruch 1, **dadurch gekennzeichnet,** daß die genannten Teilnehmerstationen mit einem Servicereferenzzentrum (4) durch das öffentliche Telefonvermittlungsnetz (5) verbunden sind, und
daß das genannte Servicereferenzzentrum (4) empfangene Daten an eine Koordinierungsstelle (80) für interaktive Fernsehereignisse (PCE) überträgt, und dadurch,
daß die Koordinierungsstelle (80) (PCE) wieder Daten an die Teilnehmerstationen in Bereitschaft entsprechend den vom Teilnehmer übermittelten Daten überträgt.

3. System nach den Ansprüchen 1 oder 2, **dadurch gekennzeichnet,** daß der genannte Dekodierer (30) folgendes einschließt:
- einen durch einen Microcomputer (35) gesteuerten Prozessor (32) für eingehende und ausgehende Video/Audio-Signale;
- einen mit dem genannten Microcomputer (35) verbundenen Infrarotempfänger, der geeignet ist, von der genannten Tastatur (20) ankommende Signale zu empfangen;
- ein Hochfrequenzsystem (33), das geeignet ist, Hochfrequenzsignale an die genannte Vorrichtung (10) zum direkten Zugang zur Telefonleitung (LT) zu senden.

4. System nach Anspruch 2, **dadurch gekennzeichnet,** daß der genannte Dekodierer (30) geeignet ist, auf dem Fernsehgerät (18) Bildfenster darzustellen, die in die Bilder der empfangenen Programme eingeblendet werden.

5. System nach den Ansprüchen 3 oder 4, **dadurch gekennzeichnet,** daß der genannte Dekodierer (30) ferner eine Schnittstelle (34) für einen Drucker und eine Spracheinrichtung (37) zur Übermittlung von Sprachmitteilungen zu dem Teilnehmer enthält.

6. System nach Anspruch 5, **dadurch gekennzeichnet,** daß der genannte TV-Dekodierer (30) ferner eine VCR-Schnittstelle (36) einschließt.

7. System nach den vorhergehenden Ansprüchen, **dadurch gekennzeichnet,** daß die genannte Fernbedienung (20) einen Infrarotsender (22) und eine mit vier Richtungstasten und einer Bestätigungstaste versehenen Tastatur (21) umfaßt.

8. System nach den vorhergehenden Ansprüchen, **dadurch gekennzeichnet,** daß die genannte Fernbedienung (20) einen Infrarotsender (22), einen ersten Teil einer universellen Fernbedienung mit einer zu einer Matrix (23A) gehörenden Tastatur (23) für die Steuerung des Fernsehgerätes (18) und einen zweiten Teil mit einer zu einer Matrix (21A) gehörenden Tastatur (21) zur Steuerung des Dekodierers (30) und einen Mikroprozessor (26) einschließt, wobei letzterer geeignet ist, automatisch festzustellen, ob die Steuersignale von der Matrix (21A) der Steuerungstastatur (21) des Dekodierers (30) abgegeben wurden oder von der Matrix (23A) der Steuerungstastatur (23) des Fernsehgerätes.

9. System nach Anspruch 7, **dadurch gekennzeichnet,** daß die genannte Tastatur zusätzlich einen Ein/Ausschalter und eine Taste zur Aktivierung des Menus umfaßt.

10. System nach den vorhergehenden Ansprüchen, **dadurch gekennzeichnet,** daß die genannte Vorrichtung (10) für den direkten und automatischen Zugang zur Telefonleitung folgendes einschließt:
- eine Hochfrequenzempfangsvorrichtung (11), die vom genannten Hochfrequenzsystem (33) ausgegebene Hochfrequenzsignale empfängt;
- ein Prozessorsystem (13), das die von einem oder mehreren Dekodierern (30) empfangenen Informationen liest, und das die von verschiedenen gleichzeitigen Zugangsanforderungen herrührenden Konflikte steuert;
- ein mit dem genannten Prozessorsystem (13) verbundenes Modem/DTMF (15);
- eine zwischen das genannte Modem/DTMF (15) und die Telefonleitung (LT) eingefügte Telefonschnittstelle (12).

11. System nach Anspruch 10, **dadurch gekennzeichnet,** daß die genannten Hochfrequenzempfänger (11) innerhalb der Vorrichtung (10) für den automatischen Zugang (33) im TV-Dekodierer (30) sich aus Hochfrequenzsendern/-empfängern zusammensetzen.

12. System nach Anspruch 7, **dadurch gekennzeichnet,** daß die genannte Vorrichtung (10) für den direkten und automatischen Zugang zur Telefonleitung weiter eine Stromversorgungsschaltung (14) einschließt, die die genannte Vorrichtung durch die Telefonleitung mit Strom versorgt.

13. System nach den vorhergehenden Ansprüchen,
**dadurch gekennzeichnet,** daß der genannte TV-Dekodierer (30) und die genannte automatische Zugangsvorrichtung (10) selbst-installierend und selbstanpassend sind, und daß sie ohne Eingreifen externer Spezialisten anwendbar sind.

14. System nach den vorhergehenden Ansprüchen, **dadurch gekennzeichnet,** daß die genannte Vorrichtung (10) mit dem dreipoligen Stecker (BS) des Telefonsystems wie ein normaler Telefonapparat verbunden und mit einem dreipoligen Stecker (12A) auf der einen Seite und mit einer Steckdose (12B) auf der anderen Seite versehen ist.

15. System nach den vorhergehenden Ansprüchen,
**dadurch gekennzeichnet,** daß die genannte Tastatur (20) in den Dekodierer (30) eingebaut ist.

16. System nach den Ansprüchen 1 bis 4, **dadurch gekennzeichnet,** daß die genannte Tastatur (20) in eine Fernbedienung eingebaut ist, die geeignet ist, ein Steuersignal zu dem genannten Dekodierer (30) zu senden.

17. System nach Anspruch 1, **dadurch gekennzeichnet,** daß die genannte Vorrichtung (10) für den direkten und automatischen Zugang zur Telefonleitung (LT) mit dem genannten Dekodierer mittels Infrarotstrahlen verbunden ist.

18. System nach Anspruch 1, **dadurch gekennzeichnet,** daß zu dem genannten TV-Träger (53) ein TV-Erzeuger (60) gehört, der folgendes einschließt:
- ein "Story-Board"-Kreationssystem (66), das geeignet ist, die mit Videosignalen zu verbindenden Daten zu erzeugen;
- einen Digitalisierer (63), der geeignet ist, die Videosignale in die digitale Form umzuwandeln;
- ein Synchronisationssystem (67), das geeignet ist, vom genannten Digitalisierer (63) das zu dem Film und eventuell zu dem Teilbild gehörende Zeitcodesignal zu empfangen und den Zeitcode mit vom genannten Story-Board-Kreationssystem (66) abgegebenen interaktiven Daten zu synchronisieren;
- ein Dateneinfügsystem (64), das geeignet ist, die Daten und den Zeitcode in das Videosignal einzufügen;
- ein Ausgangssystem (65), das geeignet ist, die vom genannten Dateneingabesystem (64) ausgegebenen Daten zu empfangen.

19. System nach Anspruch 2, **dadurch gekennzeichnet,** daß die Koordinierungsstelle (80) für interaktive Fernsehereignisse (PCE) folgendes einschließt:
- eine Steuereinheit (84);
- eine mit der genannten Steuereinheit (84) verbundene TTX-Konsole (89);
- einen Monitor (81);
- eine Teilnehmerkontrolleinheit (88), die geeignet ist, die Dienstleistungen des Netzes gemäß dem Ereignis hinsichtlich der Tarife und aller Filter zu modifizieren
- ein Datensammelsystem (87) vom genannten Servicereferenzzentrum (4), das mit der genannten Steuereinheit (84) verbunden ist.

20. System nach den Ansprüchen 1 und 19, **dadurch gekennzeichnet,** daß die genannte Koordinierungsstelle (80) mit dem genannten TV-Träger (53) durch ein Teletextsystem (55) verbunden ist.

21. System nach den vorhergehenden Ansprüchen, **dadurch gekennzeichnet,** daß der genannte Dekodierer (30) in den Fernsehempfänger (18) eingebaut und über Hochfrequenz mit der genannten Vorrichtung (10) für den direkten und automatischen Zugang zur Telefonleitung (LT) verbunden ist.

## Revendications

1. Système de télévision interactif comprenant au moins une station de télévision (2) apte à diffuser, des signaux vidéo et des données codifiées (TTX), et une pluralité de stations d'abonné (3), chacune équipée d'un téléviseur (18), un décodeur (30) connecté audit téléviseur (18) et apte à capter lesdites données codifiées (TTX) et à les visualiser sur l'écran dudit téléviseur (18), un dispositif de contrôle (20) comprenant un clavier (21) pour transmettre des signaux de contrôle de l'abonné audit décodeur (30), des moyens de connexion entre le décodeur (30) et l'émetteur de télévision, lesdits moyens de connexion étant reliés à l'émetteur de TV par un réseau téléphonique pour transmettre audit émetteur des messages de l'abonné ensemble avec l'information contenue dans lesdites données codifiées (TTX), caractérisé en ce que lesdits moyens de connexion comprennent un dispositif auto-embrochable (10) pour l'accès mécanique direct et automatique à une ligne téléphonique (LT), ce dispositif étant configuré de manière à présenter une fiche mâle (12A) prévue sur un côté du dispositif, destinée à être embrochée dans le jack (BS) du système téléphonique de la même façon que la fiche mâle d'un poste téléphonique normal, et présentant, sur son autre côté, une fiche femelle (12B) pour assurer la connexion avec la fiche mâle du poste téléphonique, le dispositif (10) étant relié au décodeur (30) par l'intermédiaire d'une liaison radiofréquence sans fil.

2. Système selon la revendication 1 caractérisé en ce que lesdites stations d'abonné sont reliées à un centre de services de référence (4) par un réseau de communication téléphonique publique (5), et que ledit centre de services de référence (4) transmet des données reçues à une station de coordination pour des événements de télévision interactifs (PCE), et en ce que la station de coordination -80) (PCE) transmet de nouveau des informations vers la station d'abonné en attente selon les données transmises par l'abonné.

3. Système selon la revendication 1 ou 2 caractérisé en ce que ledit décodeur (30) comprend un processeur de signaux audio/vidéo en entrée/sortie (32) contrôlé par un micro-ordinateur (35), un récepteur infrarouge (31) connecté audit micro-ordinateur (35) apte à recevoir des signaux arrivants dudit clavier (20), un système de radiofréquence (33) apte à transmettre des signaux de radiofréquence audit dispositif (10) pour l'accès direct à la ligne téléphonique (LT).

4. Système selon la revendication 3 caractérisé en ce que ledit décodeur (30) est apte à visualiser des fenêtres sur l'écran de télévision (18), qui sont superposées à l'image du programme reçu.

5. Système selon la revendication 3 ou 4 caractérisé en ce que ledit décodeur (30) comprend en plus une interface (34) pour une imprimante et un dispositif de sons (37) pour la transmission de messages phoniques adressés à l'abonné.

6. Système selon la revendication 5 caractérisé en ce que ledit décodeur de télévision (30) comprend en plus une interface VCR (36).

7. Système selon les revendications précédentes caractérisé en ce que ladite télécommande (20) comprend un transmetteur infrarouge (22) et un clavier (21) équipée de quatre boutons directionnels et un bouton de confirmation.

8. Système selon les revendications précédentes caractérisé en ce que la télécommande (20) comprend un transmetteur infrarouge (22), une première portion d'une télécommande universelle avec un clavier (23) associé à une matrice (21A) pour le contrôle du téléviseur (18) et une deuxième portion avec clavier (21) associé à une matrice (21A) pour le contrôle du décodeur (30), et un microprocesseur (26) apte à reconnaître automatiquement, si les signaux de contrôle parviennent de la matrice (21A) du clavier de contrôle (21) du décodeur (30) ou de la matrice (23A) du clavier de contrôle (23) du téléviseur.

9. Système selon la revendication 7 caractérisé en ce que ledit clavier comprend en plus un bouton ON/OFF et un bouton pour l'activation du menu.

10. Système selon les revendications précédentes caractérisé en ce que ledit dispositif (10) pour l'accès direct et automatique à la ligne téléphonique comprend un dispositif de réception à radiofréquence (11), qui reçoit des signaux à radiofréquence parvenants dudit système à radiofréquence (33), un système de microprocesseur (13), qui lit les messages reçus d'un ou plusieurs décodeurs (30), et qui dirige les conflits dérivants des différentes demandes d'accès contemporaines, un modem/DTMF (15) relié audit système de microprocesseur (13), une interface téléphonique (12) mise entre ledit modem/DTMF (15) et la ligne téléphonique (LT).

11. Système selon la revendication 10 caractérisé en ce que lesdits récepteurs à radiofréquence (11) à l'intérieur du dispositif (10) pour l'accès automatique (33) dans le décodeur de télévision (30) sont composés par des émetteurs-récepteurs à radiofréquence.

12. Système selon la revendication 7 caractérisé en ce que ledit dispositif (10) pour l'accès direct et automatique à la ligne téléphonique comprend en plus un circuit d'alimentation (14), qui alimente ledit dispositif par ladite ligne téléphonique.

13. Système selon les revendications précédentes caractérisé en ce que ledit décodeur de télévision (30) et ledit dispositif d'accès automatique (10) sont auto-installants et auto-configurants et ne nécessitent pas l'intervention d'experts externes pour leur application.

14. Système selon les revendications précédentes caractérisé en ce que ledit dispositif (10) est relié à une prise tripôle (BS) du système téléphonique comme un appareil téléphonique normal, et il est équipé d'une prise mâle (12A) d'un côté et d'une prise femelle (12B) de l'autre.

15. Système selon les revendications précédentes caractérisé en ce que ledit clavier (20) est incorporé dans le décodeur (30).

16. Système selon les revendications de 1 à 14 caractérisé en ce que ledit clavier (21) est incorporé dans une télécommande apte à transmettre des signaux de contrôle audit décodeur (30).

17. Système selon la revendication 1 caractérisé en ce que ledit dispositif (10) pour l'accès direct et automatique à la ligne téléphonique (LT) est relié audit décodeur par des moyens à rayons infrarouges.

18. Système selon la revendication 1 caractérisé en ce qu'audit porteur de TV (53) un générateur de TV (60) est associé, qui comprend un système de création de "Story Board" (66) apte à générer les données à associer aux signaux vidéo, un digitaliseur (63) apte à convertir les signaux vidéo en forme digitale, un système de synchronisation (67) apte à recevoir ledit digitaliseur (63) le signal de code de temps associé avec le film et éventuellement avec le cadre et à synchroniser le code de temps avec des données interactives en provenance dudit système de création "Story Board", un système d'insertion de données (64) apte à insérer les données et le code de temps dans le signal vidéo, un signal de sortie (65) apte à recevoir les signaux en provenance dudit système d'insertion de donnée (64).

19. Système selon la revendication 2 caractérisé en ce que ladite station de coordination (80) pour les événements de TV interactifs (PCE) comprend une unité de contrôle (84), une console TTX (89) reliée à ladite unité de contrôle (84), un moniteur (81), une unité de contrôle d'abonné (88) apte à modifier les prestations du réseau selon l'événement en fonction des tarifs et tous les filtres, un système de collection de données (87) dudit système de référence de prestations (4) relié à ladite unité de contrôle (84).

20. Système selon les revendications 1 et 19 caractérisé en ce que ladite station de coordination (80) est reliée audit porteur de télévision (53) par un système de télétexte (55).

21. Système selon les revendications précédentes caractérisé en ce que ledit décodeur (30) est incorporé dans le téléviseur (18) et il est relié par radiofréquence audit dispositif (19) pour l'accès direct et automatique à la ligne téléphonique (LT).
